Europäisches Patentamt

European Patent Office

Office européen des brevets

(19)

(11) Publication number: **0 321 137**
**A2**

(12) **EUROPEAN PATENT APPLICATION**

(21) Application number: 88311563.6

(51) Int. Cl.⁴: **A61G 12/00**

(22) Date of filing: 07.12.88

(30) Priority: 18.12.87 US 135002

(43) Date of publication of application:
21.06.89 Bulletin 89/25

(84) Designated Contracting States:
AT CH DE FR GB IT LI

(71) Applicant: HILL-ROM COMPANY, INC. (an
Indiana corporation)
Highway 46
Batesville Indiana 47006(US)

(72) Inventor: Foster, L. Dale
5235 River Road
Brookville, IN 47012(US)
Inventor: Hartman, Daniel A.
RR. No. 3
Sunman, IN 47041(US)

(74) Representative: McCall, John Douglas et al
W.P. THOMPSON & CO. Coopers Building
Church Street
Liverpool L1 3AB(GB)

(54) Computer cart.

(57) There is disclosed a computer cart having a
base (10), a post (15) mounted on the base (10), a
chassis (20) mounted on the post (15) and a com-
puter (40) having a thin, flat housing (43) mounted in
a vertical orientation on the chassis (20).

FIG. 4

FIG. I

EP 0 321 137 A2

## COMPUTER CART

This invention relates to a computer cart, and more particularly, to a medical cart that carries a computer as well as other accessories that a nurse needs in the making of rounds to the patients.

While the compact computer cart of the present invention will have applications other than medical, the invention will be described in relation to a medical cart to be used by a nurse in making rounds of patients.

While the practices of making rounds will vary from hospital to hospital, certain procedures of recording information, dispensing medicine and the like remain essentially the same. The nurse will start her rounds with a cart having the medicines to be dispensed to the patients, six, for example, in her care. The nurse will carry a crib sheet on which to record information. At each patient, the nurse will take and record vital signs, that is, temperature, blood pressure, pulse and respiration. The nurse will also make and record a physical assessment, including whether or not the patient is in acute distress, the patient's colour, the condition of the patient's dressings. The nurse will record intake and output in those situations where the patient is being administered intravenous solutions and where a patient has a drainage bag and catheter for draining urine. Any complaints the patient has will be noted on the crib sheet.

The nurse will dispense the prescribed medicine and will record the fact that that has been done.

At some time during the day, perhaps at the end of the shift, the nurse will transcribe all of the ·information from the crib sheet to the patient's main chart at the nurse's station. This information may in turn be entered into a computer.

An object of the present invention has been to significantly improve the efficiency of the nurse as she makes her rounds.

This objective of the invention has been attained by providing a medical cart having a computer, the cart going into the patient's room with the nurse as she makes her rounds. The concept of a cart-carried computer that goes with the nurse as she makes her rounds from patient to patient has a number of advantages. With each patient, the nurse can bring up onto the computer screen all of the recorded data for the patient including the prescribed medicines. All of the information that the nurse had heretofore entered on her crib sheet is entered directly into the computer as each procedure is performed. The need to transcribe from the crib sheet onto the patient's chart all of that information is eliminated, for once the information goes into the computer disc, for example, it can be dumped out of the disc into a main frame.

The computer cart includes a thin, vertically-oriented chassis mounted by a post to a base. The computer housing is thin and substantially flat and is also verticlly mounted on the chassis so that the combined chassis and computer is as compact as possible. The computer has a keyboard which normally is in a generally vertical attitude overlying the display screen, but when in operative position is swung to a horizontal position.

The chassis carries a grab bar which is C-shaped and has a bight portion that surrounds the computer housing and projects from the computer housing a sufficient distance to act as a protective bumper for the computer. The grab bar is also in a position to support the keyboard when it is swung to a horizontal position.

The invention further contemplates the provision of a pneumatic spring attachment between the cart chassis and the base of the cart so that the chassis can be raised and lowered within a range of about ten inches so as to make the keyboard of the computer convenient for the nurse in a standing position with the chassis raised or with the nurse in a sitting position with the chassis lowered.

The invention further contemplates the mounting of accessories on the chassis. For example, to one side of the chassis a container is provided for mounting vital signs apparatus such as a sphygmomanometer, stethoscope, and thermometer. The invention also contemplates the mounting on the chassis of a two-way radio circuit that connects the computer into the hospital main frame. Alternatively, the invention contemplates that the computer would be hard wire connected to the hospital computer main frame. In either event, it is possible for .the nurse to communicate not only with the main .frame but additionally the computer could interact with any place in the world.

The invention also contemplates the mounting on the chassis of a supply cabinet containing medicines, dressings, and other dispensed materials that the nurse needs as she makes her rounds.

Thus, it is the basic concept of the invention that, as the nurse makes her rounds, she has everything she needs including data relating to the patient and the capability of entering into the computer all of the procedures that she takes with respect to the patient.

The invention will now be further described by way of example with reference to the accompanying drawings, in which:

Fig.1 is a perspective view of the invention;

Fig.2 is a perspective view similar to that of Fig.1 showing the keyboard in a closed position;

Fig.3 is a rear elevational view of the chassis;

Fig.4 is a disassembled perspective view illustrating the mounting of the computer to the chassis;

Fig.5 is a diagrammatic perspective view of an alternative chassis mounting; and

Fig.6 is a diagrammatic perspective view of another alternative chassis mounting.

The cart has a base 10 formed from a central horizontal bar 11 and two outboard horizontal bars 12. The bars 12 carry four-inch casters 13 at each end so that the cart is supported on four casters, the large casters minimizing the possibility of the cart's tipping over. The base is quite compact, defining a rectangle that is about 17" x 20". The base carries a vertical post 15 that is divided into a lower section 16 and a removable upper section 17. A chassis 20 is slidably mounted on the upper end of the post section 17. The slidable mounting includes a bracket 21 that is fixed to the post section 17 and contains vertical bearings 22 on each side. The chassis 20 has a recess 25 within which two vertical rods 26 are fixed, the vertical rods being slidable in the bearings 22 of bracket 21. A pneumatic or gas spring 27 mounted at the centre of the recess 25 is connected at its upper end to the chassis and at its lower end to the post section 17. The pneumatic spring urges the chassis upwardly and counterbalances the weight of the chassis and devices mounted on the chassis. The chassis carries a lever 28 pivoted at 29 to a block 30 that is threaded onto the end 31 of the gas spring. The end of lever 28 is engageable with a latch pin 32 on the gas spring. When the lever engages the pin and the pin is depressed, the spring is released to permit raising or lowering of the chassis. When the lever 28 is released, the gas spring latches in the position attained at the time of release. Thus, the lever and gas spring enable the chassis to be locked in any selected position on the vertical rods 26. The slidable connection permits vertical movement of about 10" to raise the computer keyboard between heights of about 28" and 38".

The chassis 20 has two major vertical faces 36 and 37. Each face 36 and 37 has four latch holes 38.

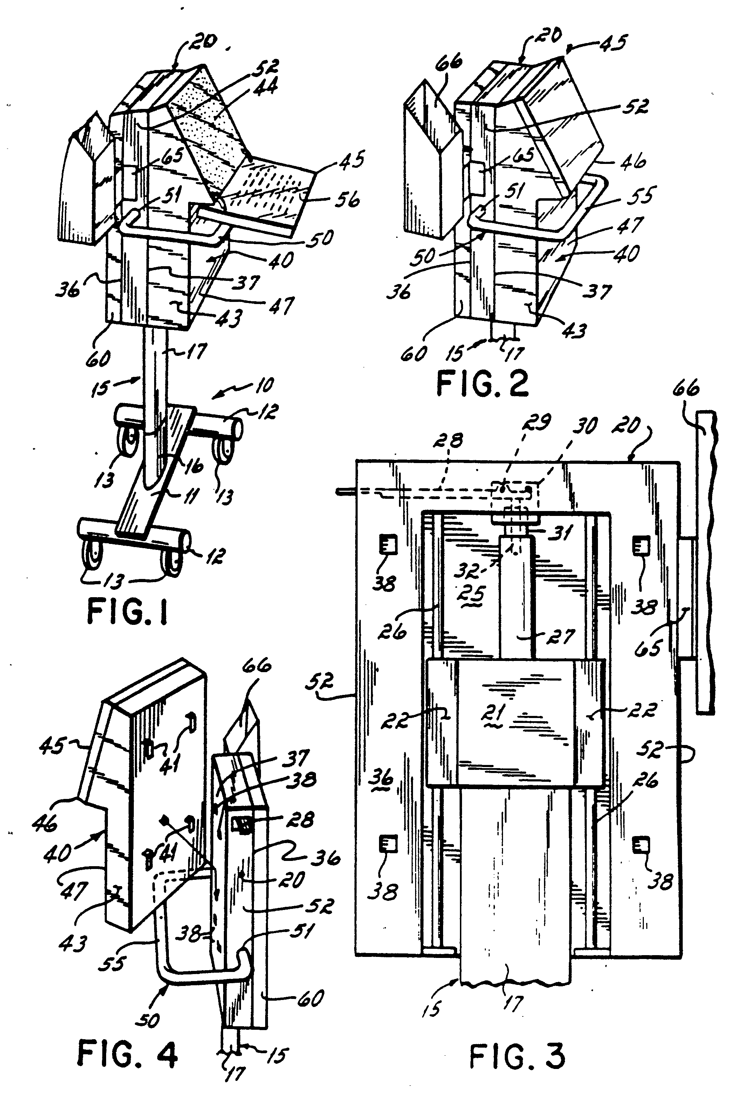

A computer 40 is mounted on the face 37. The computer has four hooks 41 that are alignable with the latch holes 38 so as to project into the latch holes to mount the computer on the chassis. The computer has a thin, flat housing 43 which, at its upper end, has a slightly angulated and protruding display screen 44. A keyboard 45 is pivoted on the housing below the screen 44. The keyboard is adapted to be pivoted to an open horizontal position shown in Fig.1 or a closed, generally vertical position shown in Fig.2. When the keyboard is in its closed position, the housing protrudes somewhat at 46 from the front wall 47 of the housing.

The chassis has a C-shaped grab bar 50 that is mounted at 51 to the side walls 52 of the chassis 20. The grab bar has a bight portion 55 that surrounds the computer when the computer is mounted on the chassis. It can be seen from Figs. 1 and 2 that the grab bar projects beyond the horizontal extremity of the computer, indicated as the protuberance 46, so as to protect the computer. As shown in Fig.1, with the keyboard 45 in the open position, the keyboard 45 rests on the grab bar 50 so that the grab bar provides support for the keyboard.

The grab bar also performs its primary function of a handle by which the nurse is able to propel, manoeuvre and easily guide the computer cart.

The keyboard 45 preferably has a thin membrane formed as a plastic transparent shield 56 that overlies the keys so that any liquids that are inadvertently spilled will not flow into the keyboard. The shield is sufficiently resilient that the keys or the keyboard can be operated with the shield in place.

The wall 36 of the chassis 20 is designed to receive alternate components as indicated at 60. One such alternate component is a two-way radio converted to the computer and enabling the computer to communicate directly with a central station. Alternatively, the computer could be plugged into a hard wire connection to a central computer.

Another component is a supply cabinet having pockets for the medicines, dressings and the like that the nurse must use and dispense during her rounds.

The chassis 20 also has a bracket 65 on which an accessory container 66 is mounted. The accessory container carries vital signs monitoring equipment such as a sphygmomanometer for blood pressure, a thermometer and a stethoscope. The container may also carry a bar code wand for entering patient and nurse identification into the computer.

In operation, the nurse, when making rounds, pushes or pulls the computer cart by grasping the grab bar 50. The base as well as the "footprint" of the chassis and vertically oriented computer is so compact that the cart is easily moved into the space adjacent a patient's bed. The patient's vital signs are checked and data is entered into the computer. For this purpose, the computer keyboard is flipped from its vertical closed position to a horizontal open position in which it rests on the grab bar. If the data is to be entered with the nurse in a standing position, the chassis is raised, pivoting the latch 28 and, with the counterbalancing of the gas spring, the chassis can easily be raised to the higher level. On the other hand, if the data is to be entered with the nurse sitting down, she will find it more convenient to lower the chassis by releasing the latch and pressing down on the chassis to overcome the slight pressure of the gas spring. As medicines are dispensed, that procedure is entered into the computer. Any other procedures are also entered into the computer. Provision will be made for a computer automatically dating and timing the entries so that it becomes clear, even in the event of a dispute, that the nurse properly attended the patient.

The computer could have an operative radio transmitter and receiver so that communication would be made directly with the hospital computer main frame. Alternatively, the computer could be plugged into a hard wired outlet in the wall of the patient's room that communicates directly with the main frame, the hard wiring being likely to be found in a modern hospital.

At the end of the round, if there has not been direct communication with the main frame, the contents of the disc can be read into the memory of the main frame of the computer.

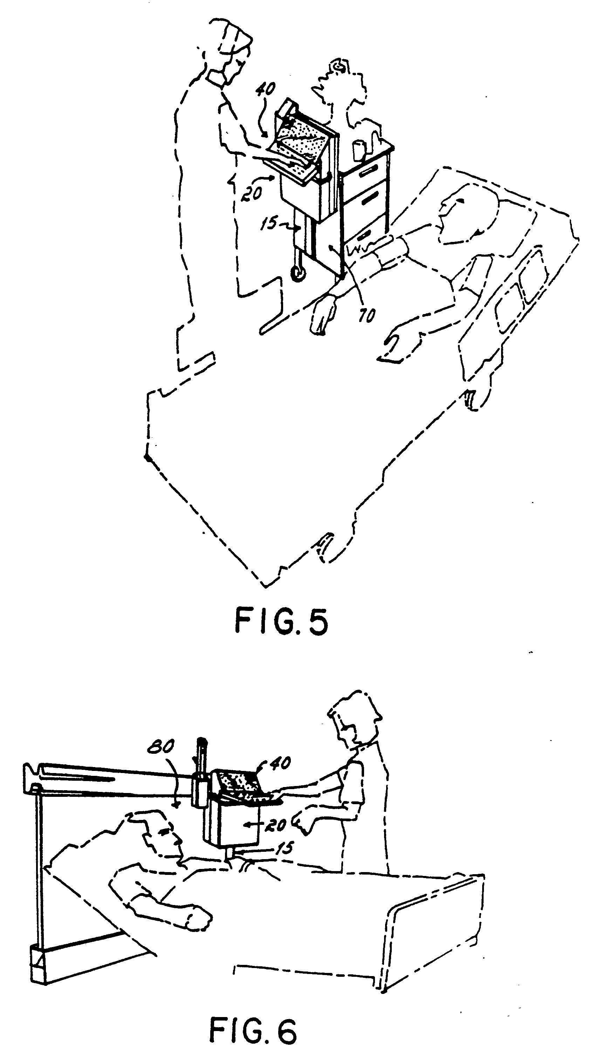

It should be understood that the base and wheels may be eliminated and the apparatus may be mounted as a fixture in the patient room. For example, the chassis 20 and computer 40 may be secured to the post 15 and the post 15 secured to a bedside cabinet 70 as shown in Fig.5; or to a wall 80 of the patient room as shown in Fig.6. While stationary, the computer and chassis may nevertheless be raised and lowered in the same manner as described in the previous embodiment.

From the above disclosre of the general principles of the present invention and the preceding detailed description of a preferred embodiment, those skilled in the art will readily comprehend the various modifications to which the present invention is susceptible. Therefore, we desire to be limited only by the scope of the following claims and equivalents thereof.

**Claims**

1. A computer cart characterised by comprising:
a base (10), casters (13) on said base (10), a vertical support (15) having a lower end (16) mounted on said base (10), a chassis (20) mounted on the upper end (17) of said vertical support (15), said chassis (20) having a vertical wall (37), a computer (40) having a thin flat housing (43), means (38.41) for mounting said computer housing (43) in a vertical orientation on said vertical wall (37), and a keyboard (45) hinged to said housing (43) and having a vertical rest position and a horizontal operative position.

2. A computer cart as claimed in claim 1, characterised by further comprising:
means (22,26,27) on said support (15) for raising and lowering said chassis (20) with respect to said base (10).

3. A computer cart as claimed in claim 1 or 2, characterised by further comprising:
a C-shaped horizontal grab bar (50) having ends fixed on each side of said chassis (20) and having a bight portion (55) extending across said computer housing (43) below said hinge, said keyboard (45) resting on said grab bar (50) when in operative position.

4. A computer cart as claimed in claim 3, characterised in that said grab bar (56) projects beyond all horizontal extremities of said computer (40) when said keyboard (45) is in a rest position, thereby providing a bumper protecting said keyboard (45).

5. A computer cart as claimed in any one of the preceding claims, characterised by further comprising:
a radio transmitter mounted on the side (36) of said chassis (20) opposite said computer (40), means connecting said transmitter to said computer (40) to enable communication between said computer (40) and a stationary main frame.

6. A computer cart as claimed in any one of the preceding claims, characterised by further comprising a vital signs kit mounted on said chassis and including at least a sphygmomanometer and temperature indicator to provide data for entry into said computer (40).

7. A computer cart as claimed in any one of the preceding claims, characterised by further comprising a thin membrane (56) overlying said keyboard (45) to protect it from accidental liquid spillage.

8. A computer cart as claimed in any one of the preceding claims, characterised by further comprising a medication supply housing mounted on said chassis, thereby permitting a nurse to display on the computer the medicine required to administer medicine from the cart, and to enter into the computer the medicine administered.

9. A computer cart characterised by comprising:
a base (10), casters (13) on said base (10), a vertical post (15) mounted on said base (10), a chassis (20) mounted on said post (15) for vertical sliding movement with respect to said post (15), a computer (40) having a thin flat housing (43), means (38,41) for mounting said computer housing (43) in a vertical orientation on said chassis (20), a C-shaped grab bar (50) mounted on said chassis (20) and surrounding said computer housing (43) to a) protect said computer (40), b) assist in raising and lowering said chassis (20), and c) assist in propellilng and manoeuvering said cart.

10. A computer cart as claimed in claim 9, characterised by further comprising:
a pneumatic spring (27) connected between said post (15) and housing (43) urging said housing (43) in an upward direction to counterbalance the weight of the housing (43) and computer (40).

11. A computer cart as claimed in claim 10, characterised by further comprising:
a latch lever (28) pivotally mounted with respect to said chassis (20), said latch lever (28) being engageable with said pneumatic spring (27) to latch said chassis (20) in any one of a plurality of vertical positions with respect to said base (10).

12. A computer mount characterised by comprising:
a vertical support (15) having a lower end (13) for mounting on a cabinet, wall or the like, a chassis (20) mounted on the upper end (17) of said vertical support (15), said chassis (20) having a vertical wall (37), a computer (40) having a thin flat housing (43) in a vertical orientation on said vertical wall (37), and a keyboard (45) hinged to said housing (43) and having a vertical rest position and a horizontal operative position.

13. A computer mount as claimed in claim 12, characterised by further comprising:
means (22,26,27) on said support (15) for raising and lowering said chassis (20) with respect to said support (15).

14. A computer mount as claimed in claim 12 or 13, characterised by further comprising:
a C-shaped horizontal grab bar (50) having ends fixed on each side of said chassis (20) and having a bight portion (55) extending across said computer housing (43) below said hinge, said keyboard (45) resting on said grab bar (50) when in operative position.

FIG. I

FIG. 2

FIG. 3

FIG. 4

FIG.5

FIG.6